# FASCICULE DE BREVET EUROPEEN

(11) **EP 2 815 933 B1**
(45) Date de publication et mention de la délivrance du brevet: **01.01.2020**
(21) Numéro de dépôt: 14172059.9
(22) Date de dépôt: 12.06.2014
(51) Int. Cl.: B60S 1/38

(54) **Dispositif chauffant destiné à un balai d'essuie-glace et balai d'essuie-glace comportant un tel dispositif chauffant**
Heizvorrichtung für Scheibenwischerarm, und Scheibenwischerarm, der eine solche Heizvorrichtung umfasst
Heating device for a windscreen-wiper blade and windscreen-wiper blade comprising such a heating device

(30) Priorité: 20.06.2013 FR 1355852
(43) Date de publication de la demande: 24.12.2014
(73) Titulaire: Valeo Systèmes d'Essuyage, 78322 Le Mesnil Saint Denis (FR)
(72) Inventeur: Caillot, Gérald, 78720 CERNAY LA VILLE (FR); Izabel, Vincent, 91380 CHILLY MAZARIN (FR); Jarasson, Jean-Michel, 78321 LE MESNIL SAINT DENIS (FR)
(74) Mandataire: Callu-Danseux, Violaine

(56) Documents cités:
- EP-A2- 2 272 727
- WO-A1-2011/003613
- WO-A1-2012/000868
- DE-A1-102010 007 557

## Description

La présente invention a pour objet un dispositif chauffant destiné à être assemblé à un balai d'essuie-glace ainsi que le balai d'essuie-glace comportant un tel dispositif chauffant.

Elle s'applique notamment à un dispositif chauffant comprenant un élément structurel tel qu'une vertèbre sur laquelle est disposé un élément chauffant.

La présente invention a également pour objet un procédé permettant d'assembler un dispositif chauffant du type susdit à un connecteur de balai destiné à être articulé à un bras d'actionnement d'essuie-glace, tout en assurant après assemblage une connexion électrique entre le dispositif chauffant et le connecteur de balai.

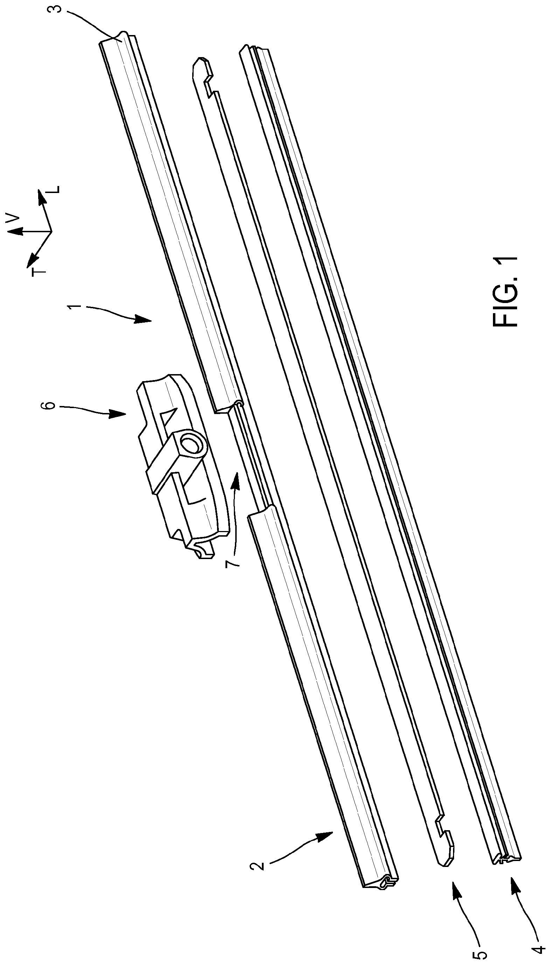

Le document de brevet FR 2 911 834 au nom de la Demanderesse décrit un balai d'essuie-glace non chauffant du type dit « flat-blade ». Tel que cela est représenté sur la figure 1, un balai d'essuie-glace 1 à vertèbre unique de ce type comprend :
- une monture de support 2 ayant un corps tubulaire 3 axé longitudinalement qui comporte des moyens de connexion d'une lame racleuse 4 ;
- une vertèbre 5 disposée à l'intérieur du corps tubulaire 3 ; et
- un connecteur de balai monobloc 6 permettant de relier le balai 1 avec un bras d'actionnement.

L'assemblage des éléments du balai 1 est réalisé en effectuant successivement :
- le montage du connecteur de balai 6 sur la monture de support 2, connecteur de balai 6 s'engageant dans une ouverture 7 du corps tubulaire 3, selon un mouvement de coulissement vertical du haut vers le bas si l'on adopte les orientations verticale, longitudinale et transversale selon le repère V, L, T indiqué sur la figure 1 ;
- l'introduction de la vertèbre 5 à l'intérieur du corps tubulaire 3, la vertèbre 5 étant introduite au niveau de l'une des extrémités longitudinales du corps tubulaire 3 ;
- le coulissement longitudinal de la vertèbre 5 jusqu'à sa position finale.

Par ailleurs, des essuie-glaces comprenant des éléments chauffants peuvent être installés sur des véhicules afin notamment de dégeler le balai en cas de grand froid et éviter qu'il colle au pare-brise sous l'action du gel, ou de chauffer des rampes d'acheminement et de distribution d'un fluide de nettoyage et/ou de dégivrage comprises dans le balai.

Le document WO 2011/003613 A1 montre un balai d'essuie glace selon le préambule de la première revendication.

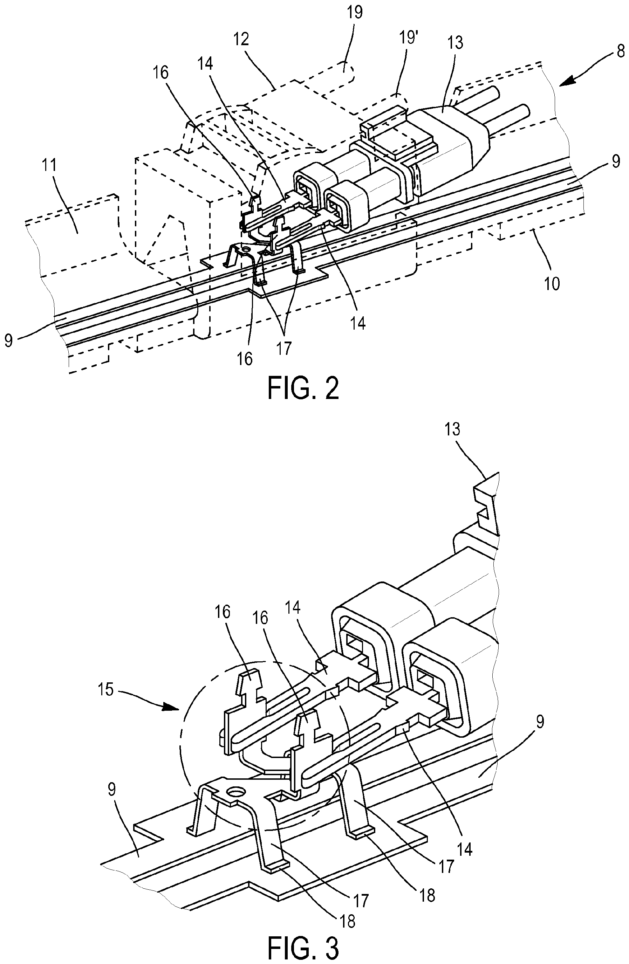

Typiquement, tel que cela est représenté sur les figures 2 et 3, un balai d'essuie-glace chauffant 8 de l'état de la technique comporte :
- deux films chauffant 9 comportant des résistances électriques ;
- deux vertèbres, en forme de lame, sur chacune desquelles est disposé un film chauffant 9 ;
- une lame racleuse 10 axée longitudinalement ;
- une pièce de forme appelée couramment « spoiler » 11 axée longitudinalement qui est maintenue par les deux vertèbres sur chacune desquelles est disposé le film chauffant 9, la lame racleuse 10 s'étendant sur l'une des faces longitudinales de cette pièce de forme 11 en position connectée et les deux vertèbres étant maintenues par un connecteur de balai 12.

Ce balai d'essuie-glace 8 est articulé sur un bras d'actionnement par l'intermédiaire d'un adaptateur connecté d'une part audit bras et d'autre part à ce connecteur de balai 12 qui est lui-même connecté audit balai 8.

Le connecteur de balai 12 permet de raccorder un conduit d'arrivée (non représenté) relié à une source de fluide de nettoyage et/ou de dégivrage à au moins une rampe (non représentée) d'acheminement et de distribution dudit fluide comprise dans le balai 8. Le connecteur de balai 12 comporte ainsi deux paires 19, 19' de raccords de sortie destinées à alimenter en fluide de nettoyage et/ou de dégivrage au moins deux rampes.

Le connecteur de balai 12 comporte un connecteur électrique 13 relié au circuit électrique du véhicule, le connecteur de balai 12 comprenant deux cosses 14 présentant chacune sensiblement la forme d'un « U » couché auxquelles est connecté le connecteur électrique 13.

En position assemblée, le connecteur électrique 13 est connecté au film chauffant 9 au moyen d'un dispositif de connexion électrique 15 qui comporte deux pièces métalliques 16 présentant sensiblement la forme de languettes et axées verticalement par rapport au film chauffant 9, ces pièces métalliques 16 sont chacune aptes à s'introduire dans la fente délimitée par chaque cosse 14 afin d'assurer une connexion dite de type fourchette. Chacune de ces pièces métalliques 16 comprend une paire de pieds électriquement conducteurs 17 présentant sensiblement la forme d'une languette comportant à son extrémité un patin 18 en contact avec un film chauffant 9.

Il s'avère que la structure d'un balai d'essuie-glace chauffant tel que celui représenté sur les figures 2 et 3 ne permet pas de monter la vertèbre dans un corps tubulaire en lui imprimant un mouvement de coulissement comme décrit dans le document de brevet FR 2 911 834. En effet, le contact des patins d'un dispositif de connexion électrique sur le film chauffant, dans l'hypothèse d'un coulissement de la vertèbre dans un corps tubulaire, risquerait de provoquer une déformation du film chauffant et/ou une dégradation de la face de contact du patin ayant fait l'objet d'un traitement de surface, ce qui altère l'efficacité du contact électrique entre le patin et le film chauffant.

La présente invention a pour objet de remédier à ces inconvénients en proposant un dispositif chauffant compris dans un balai d'essuie-glace ainsi que le balai d'essuie-glace comportant un tel dispositif chauffant, dont la structure permet d'assembler par coulissement la vertèbre sur laquelle est disposé un élément chauffant, sans altérer la structure des éléments composant le balai d'essuie-glace.

A cet effet, elle propose un balai d'essuie glace selon le préambule de la première revendication.

Préférentiellement, la vertèbre présente sensiblement la forme d'une lame longitudinale de section rectangulaire qui comporte deux grandes faces longitudinales opposées, l'une de ces grandes faces longitudinales comprenant l'élément protubérant électriquement conducteur.

De manière préférentielle, l'élément chauffant est un film chauffant.

L'élément chauffant peut également être notamment, mais non exclusivement, des fils chauffants ou une couche de peinture résistive.

Préférentiellement, le dispositif de connexion électrique est flexible afin d'optimiser le contact avec l'élément protubérant.

Le connecteur de balai du balai peut être hydraulique et comprendre au moins une rampe d'acheminement et de distribution d'un fluide de nettoyage et/ou de dégivrage destiné à être pulvérisé sur la surface de contact de la lame racleuse.

Avantageusement, le connecteur de balai comprend un connecteur électrique logé dans ce connecteur de balai et un dispositif de connexion électrique.

Selon l'invention, le dispositif de connexion électrique comprend un fil électriquement conducteur, recourbé, formant frotteur, et apte à coopérer avec l'élément protubérant.

Selon la variante d'exécution de l'invention, le dispositif de connexion électrique comprend une demi-sphère montée sur ressort, formant frotteur, et apte à coopérer avec l'élément protubérant de façon à maintenir un contact électrique.

Selon une autre variante d'exécution de l'invention, le dispositif de connexion électrique est fixé au connecteur électrique de manière déconnectable.

La présente invention a également pour objet un dispositif d'essuyage caractérisé en ce qu'il comprend un balai d'essuie-glace selon l'invention.

La présente invention a également pour objet un procédé d'assemblage d'un balai d'essuie-glace selon l'invention, caractérisé en ce qu'il comprend les étapes suivantes :
- le montage du connecteur de balai sur la monture de support du balai d'essuie-glace ;
- l'introduction de la vertèbre à l'intérieur du logement de la monture de support, la vertèbre étant introduite au niveau de l'une des extrémités longitudinales de ladite monture de support ;
- le coulissement longitudinal de la vertèbre jusqu'à sa position finale, le dispositif de connexion électrique du connecteur électrique se trouvant alors en contact électrique avec l'élément protubérant du dispositif chauffant.

De manière préférentielle, le dispositif chauffant est apte à permettre :
- d'éviter que le dispositif de connexion électrique entre en contact avec l'élément chauffant avant que la vertèbre ne se trouve en position finale de montage ;
- la mise en contact du dispositif de connexion électrique et de l'élément protubérant lorsque la vertèbre se trouve en position finale de montage.

De cette manière, l'absence de contact entre le dispositif de connexion électrique du connecteur électrique et l'élément chauffant lors du coulissement de la vertèbre dans le logement de la monture de support permet d'éviter une déformation de l'élément chauffant et/ou une dégradation de la face de contact du dispositif de connexion électrique.

Avantageusement, le connecteur de balai et le connecteur électrique sont une pièce monobloc, fabriqué selon une unique étape de moulage.

D'autres caractéristiques et avantages de la présente invention apparaîtront à la lumière des exemples qui vont suivre et des figures ci-annexées, lesdits exemples et figures étant donnés à titre illustratif et nullement limitatif.
La figure 1, déjà décrite, est une représentation en perspective éclatée, d'un balai d'essuie-glace du type « flat blade » comprenant une seule vertèbre, et d'un connecteur de balai mécanique de l'art antérieur.
La figure 2, déjà décrite, est une représentation en perspective, d'un balai d'essuie-glace chauffant comprenant deux vertèbres, et d'un connecteur de balai hydraulique de l'art antérieur.
La figure 3, déjà décrite, est une vue d'un dispositif de connexion électrique du balai d'essuie-glace représenté sur la figure 2.
La figure 4 est une représentation en perspective, d'un balai d'essuie-glace selon l'invention dont la vertèbre et la monture de support sont en cours d'assemblage.
La figure 5 est une représentation en perspective, d'un balai d'essuie-glace selon l'invention dont la vertèbre est assemblée dans la monture de support.
La figure 6 est une représentation schématique d'un dispositif chauffant selon l'invention et d'un connecteur de balai, en cours d'assemblage et en position assemblée.
La figure 7 est une représentation schématique et partielle d'un dispositif chauffant selon une variante de réalisation de l'invention et d'un connecteur de balai, en position assemblée.

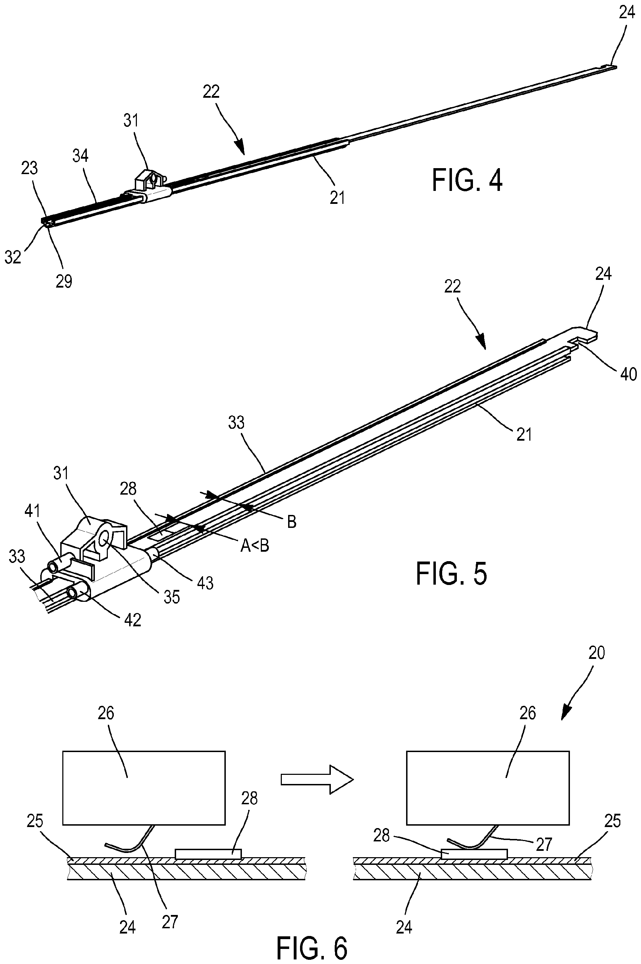

Tel que cela est représenté sur les figures 4 à 7, le dispositif chauffant 20 selon l'invention comporte une vertèbre 24 apte à être montée longitudinalement à l'intérieur du logement 23 d'une monture de support 21 d'un balai d'essuie-glace 22.

La vertèbre 24 présente sensiblement la forme d'une lame longitudinale de section rectangulaire qui comporte deux grandes faces longitudinales opposées.

La vertèbre 24 est réalisée en un matériau relativement rigide tel que l'acier afin de rigidifier la monture de support 21.

En outre, la vertèbre 24 peut comprendre au moins une encoche latérale 40 située à proximité de l'une de ses extrémités longitudinales, qui est apte à coopérer avec un ergot (non représenté) de la monture de support 21. La vertèbre 24 peut également comporter au moins une encoche latérale (non représentée) disposée sensiblement au milieu d'un bord longitudinal de la vertèbre 24, cette encoche coopérant avec un autre ergot (non représenté) du le connecteur de balai 31 afin d'assurer un blocage en translation de la vertèbre 24 par rapport au connecteur du balai.

Un élément chauffant 25 est disposé sur l'une des grandes faces longitudinales de la vertèbre 24. Cet élément chauffant 25 est un film chauffant qui peut être composé d'au moins un ruban métallique conducteur disposé entre au moins deux feuilles réalisées en matériaux électriquement isolants.

Le terme disposé s'entend ici, en contact physique, c'est-à-dire que l'élément chauffant est en contact physique sur toute sa surface avec la vertèbre.

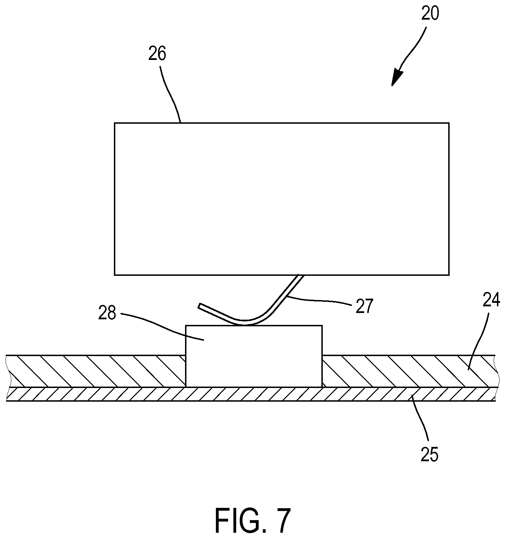

L'élément chauffant 25 peut tout aussi bien être disposé sur la face supérieure de la vertèbre 24, comme cela est représenté sur la figure 6, ou bien sur la face inférieure de la vertèbre 24, comme cela est représenté sur la figure 7. Le terme supérieur où inferieur de la vertèbre 24 se définit une fois la vertèbre montée dans un logement d'une monture de support 21 d'axe principal longitudinal qui sera décrite plus tard.

La face inferieure de la vertèbre 24 est la face se trouvant en regard des moyens de connexions 29 de la lame racleuse, une fois la vertèbre inséré dans la monture de support 21.

La face supérieure de la vertèbre 24 est la face se trouvant en regard du connecteur de balai 31, une fois la vertèbre inséré dans la monture de support 21.

La face longitudinale sur laquelle est disposé l'élément chauffant 25 comporte également un élément protubérant 28 surélevé par rapport à la face supérieure de la vertèbre 24 et en contact électrique avec l'élément chauffant 25, cet élément protubérant 28 étant réalisé en un matériau électriquement conducteur.

Tel que cela est représenté sur la figure 6, l'élément protubérant 28 qui présente sensiblement une forme parallélépipédique de largeur A, est disposé sur l'élément chauffant 25, à un emplacement où le film chauffant est dépourvu de la feuille isolante supérieure afin de permettre le contact électrique avec le ruban métallique.

Dans le cas de la figure 7, l'élément protubérant 28 qui présente également une forme sensiblement parallélépipédique, est disposé sur l'élément chauffant 25, à un emplacement où le film chauffant est dépourvu de la feuille isolante supérieure afin de permettre le contact électrique avec le ruban métallique. L'élément protubérant 28 traverse ainsi un évidement présent dans la vertèbre 24 afin que cet élément protubérant 28 soit surélevé par rapport à la face supérieure de la vertèbre 24.

La vertèbre 24 est destinée à s'engager dans le logement 23 d'une monture de support 21 d'axe principal longitudinal, cette monture 21 comportant :
- le logement longitudinal 23 qui débouche au moins à l'une des extrémités longitudinales de la monture de support 21 ;
- des moyens de maintien 29 d'une lame racleuse.

La monture de support 21 comprend également une âme longitudinale 32 séparant le logement longitudinal 23 et les moyens de maintien 29.

Le logement longitudinal 23 est délimité par l'âme longitudinale 32 de largeur B et par deux parois 33 prolongeant chacune un bord longitudinal de l'âme 32, chaque paroi 33 comprenant :
- une première partie s'étendant transversalement par rapport à ladite âme 32 ;
- une seconde partie définissant un repli, les deux replis des parois 33 venant en retour l'un vers l'autre parallèlement à ladite âme 32 de manière à délimiter une fente longitudinale 34 ;
le logement 23 étant symétrique par rapport à l'axe médian et transversal de ladite âme 32.

De cette façon, l'âme 32 et les replis permettent d'assurer un blocage de la vertèbre 24 dans le logement 23 dans une direction sensiblement orthogonale à l'âme 32.

Les moyens de maintien 29 de la lame racleuse peuvent consister par exemple en deux crochets longitudinaux disposés en vis-à-vis, délimitant un second logement longitudinal (non représenté) qui présente une conformité de forme avec l'extrémité supérieure de la lame racleuse. De cette manière, après avoir introduit l'extrémité supérieure de la lame racleuse dans ce second logement, la lame racleuse fait l'objet d'un coulissement longitudinal jusqu'à sa position finale.

Le balai 22 est relié au bras d'actionnement (non représenté) d'un essuie-glace au moyen du connecteur de balai 31 et d'un trou d'axe 35 permettant une rotation du balai par rapport au bras d'actionnement.

Le connecteur de balai 31 assure également une fonction de transport et de distribution d'un liquide de lavage/dégivrage du pare-brise. Pour ce faire, le connecteur de balai 31 comprend un circuit hydraulique constitué d'un conduit d'entrée 41, d'un canal interne (non représenté) dans lequel circule le liquide en vue d'être distribué dans le balai d'essuyage via des rampes d'arrosage (non représentées), de chaque côté du connecteur mécanique par les conduits de sortie 42 et 43. Les rampes étant comprises dans le balai 22 et se présentent sous la forme de déflecteur aérodynamique clipsé sur la monture de support 21.

Le balai d'essuie glace 22 comprend également un connecteur électrique 26 monté dans le connecteur de balai 31, et qui est relié au circuit électrique du véhicule. Ce connecteur électrique 26 permet de transmettre à l'élément protubérant 28 le courant électrique provenant du circuit électrique du véhicule.

Le connecteur de balai 31 comprend le dispositif de connexion électrique 27 connecté au connecteur électrique 26, ce connecteur 26 étant lui-même connecté au bras d'actionnement de l'essuie-glace. Le dispositif de connexion électrique 27 s'étend au moins partiellement en dehors de l'espace intérieur du connecteur de balai 31.

Tel que cela est représenté sur la figure 6, ce dispositif de connexion électrique 27 comprend un fil ou une lamelle électriquement conducteur(rice), recourbé(e), formant frotteur, et apte à coopérer avec l'élément protubérant 28 de façon à maintenir un contact électrique.

La forme courbée de ces frotteurs permet de garantir le contact électrique avec l'élément protubérant 28 quelque soit la position angulaire du balai 22 et de son connecteur de balai 31 par rapport au bras. Ce fil ou cette lamelle peuvent être flexibles afin d'optimiser le contact électrique avec l'élément protubérant 28.

Selon une variante d'exécution de l'invention, le dispositif de connexion électrique 27 peut comprendre une demi-sphère montée sur ressort, formant frotteur, et apte à coopérer avec l'élément protubérant 28 de façon à maintenir un contact électrique.

Le dispositif de connexion électrique 27 est fixé au connecteur électrique 26 de manière déconnectable. A titre d'exemple, le dispositif de connexion électrique 27 est fixé au connecteur électrique par clipsage.

Le dispositif de connexion électrique 27 peut également être fixé au connecteur électrique 26 par rivetage ou sertissage.

Le connecteur de balai 31 est monté longitudinalement sensiblement au milieu de la monture de support 21.

Selon une variante d'exécution de l'invention, le connecteur de balai 31 comprend deux pattes latérales s'étendant longitudinalement, qui sont aptes à coopérer avec une ouverture de la monture de support 21 telle que celle du balai d'essuie-glace objet du document de brevet FR 2 911 834. Le connecteur de balai 31 s'engage ainsi dans cette ouverture, selon un mouvement de coulissement vertical, lesdites pattes latérales enserrant les bords longitudinaux de la monture de support 21.

L'assemblage du dispositif chauffant 20 au connecteur de balai 31 s'effectue en mettant en œuvre les étapes suivantes :
- le montage du connecteur de balai 31 sur la monture de support 21 du balai d'essuie-glace 22 ;
- l'introduction de la vertèbre 24 sur laquelle est disposé l'élément chauffant 25 à l'intérieur du logement 23 de la monture de support 21, la vertèbre 24 étant introduite au niveau de l'une des extrémités longitudinales de ladite monture de support 21 ;
- le coulissement longitudinal de la vertèbre 24 jusqu'à sa position finale, le dispositif de connexion électrique 27 du connecteur électrique 26 se trouvant alors en contact électrique avec l'élément protubérant 28 du dispositif chauffant 20.

Comme visible à la figure 5, la largeur A de l'élément protubérant 28 est inferieure à la largeur B de l'âme longitudinale 32 afin de faciliter le coulissement de la vertèbre 24 dans la monture de support 21 et éviter ainsi tout contact entre l'élément protubérant et la monture longitudinale.

Avantageusement, pendant le coulissement de la vertèbre 24, le dispositif de connexion électrique 27 et l'élément chauffant 25 n'entrent pas en contact.

## Revendications

1. Balai d'essuie-glace (22), comprenant :
• une monture de support (21) d'axe principal longitudinal qui comporte :
• un logement longitudinal (23) qui débouche au moins à l'une des extrémités longitudinales de la monture de support (21) ;
• des moyens de maintien (29) d'une lame racleuse ;
• une lame racleuse ;
• un connecteur de balai (31) apte à relier le balai (22) avec un bras d'actionnement d'un dispositif d'essuyage, ce connecteur de balai (31) étant monté sur la monture de support (21), le connecteur de balai (31) comprenant un connecteur électrique (26) et un dispositif de connexion (27)
• un dispositif chauffant (20) apte à être assemblé à la monture de support (21) d'un balai d'essuie-glace (22) par coulissement dans un logement longitudinal (23) de la monture de support (21), le dispositif chauffant (20) comportant :
• au moins une vertèbre (24) apte à être montée longitudinalement à l'intérieur du logement (23) de la monture de support (21) ;
• au moins un élément chauffant (25) disposé sur la vertèbre (24) ; le dispositif chauffant (20) comprenant un élément protubérant (28) électriquement conducteur, en contact électrique avec l'élément chauffant (25),
**caractérisé en ce que** le dispositif de connexion électrique (27) comprend un fil électriquement conducteur, recourbé, formant frotteur, et apte à coopérer avec l'élément protubérant (28) du dispositif chauffant (20) ou le dispositif de connexion électrique (27) comprend une demi-sphère montée sur ressort, formant frotteur et apte à coopérer avec l'élément protubérant de façon à maintenir un contact électrique.

2. Balai d'essuie-glace (22) selon la revendication 1,
**caractérisé en ce que** la vertèbre (24) présente sensiblement la forme d'une lame longitudinale de section rectangulaire comportant deux grandes faces longitudinales opposées, l'une de ces grandes faces longitudinales comprenant l'élément protubérant électriquement conducteur (28).

3. Balai d'essuie-glace (22) selon l'une des revendications 1 ou 2, **caractérisé en ce que** l'élément chauffant (25) est un film chauffant.

4. Balai d'essuie-glace (22) selon l'une des revendications précédentes **caractérisé en ce que** l'élément protubérant (28) présente une largeur A et la monture de support (21) présente une âme longitudinale (32) de largeur B, la largeur A de l'élément protubérant (28) étant inférieure à la largeur B de l'âme longitudinale (32).

5. Dispositif d'essuyage,
**caractérisé en ce qu'**il comprend un balai d'essuie-glace (22) selon l'une des revendications précédentes.

6. Procédé d'assemblage d'un balai d'essuie-glace selon l'une des revendications 1 à 4,
**caractérisé en ce qu'**il comprend les étapes suivantes :
• le montage du connecteur de balai(31) sur la monture de support (21) du balai d'essuie-glace (22) ;
• l'introduction de la vertèbre (24) à l'intérieur du logement (23) de la monture de support (21), la vertèbre (24) étant introduite au niveau de l'une des extrémités longitudinales de ladite monture de support (21) ;
• le coulissement longitudinal de la vertèbre (24) jusqu'à sa position finale, le dispositif de connexion électrique (27) du connecteur électrique (26) se trouvant alors en contact électrique avec l'élément protubérant (28) du dispositif chauffant (20).

7. Procédé d'assemblage d'un balai d'essuie-glace selon la revendication précédente,
**caractérisé en ce que** le dispositif chauffant (20) est apte à permettre :
• d'éviter que le dispositif de connexion électrique (27) entre en contact avec l'élément chauffant (25) avant que la vertèbre (24) ne se trouve en position finale de montage ;
• la mise en contact du dispositif de connexion électrique (27) et de l'élément protubérant (28) lorsque la vertèbre (24) se trouve en position finale de montage.

8. Procédé d'assemblage d'un balai d'essuie-glace selon l'une des revendications précédente,
**caractérisé en ce que** le connecteur de balai (31) et le connecteur électrique (26) sont une pièce monobloc, fabriqué selon une unique étape de moulage.

## Patentansprüche

1. Scheibenwischerblatt (22), das Folgendes aufweist:
• ein Trägergestell (21) mit Hauptlängsachse, das Folgendes aufweist:
o ein Längsgehäuse (23), das mindestens an einem Längsende des Trägergestells (21) mündet;
o Haltemittel (29) eines Abstreifblatts;
• ein Abstreifblatt;
• einen Scheibenwischerverbinder (31), der geeignet ist zum Verbinden des Scheibenwischerblatts (22) mit einem Betätigungsarm einer Wischvorrichtung, wobei der Scheibenwischerverbinder (31) auf dem Trägergestell (21) angebracht ist und der Scheibenwischerverbinder (31) einen elektrischen Stecker (26) und eine Verbindungsvorrichtung (27) aufweist;
• eine Heizvorrichtung (20), die geeignet ist, um am Trägergestell (21) eines Scheibenwischerblatts (22) durch Einschieben der Heizvorrichtung in ein Längsgehäuse (23) des Trägergestells (21) montiert zu werden, wobei die Heizvorrichtung (20) Folgendes aufweist:
∘ mindestens einen Wirbel (24), der geeignet ist, um in Längsrichtung innerhalb des Gehäuses (23) des Trägergestells (21) montiert zu werden;
∘ mindestens ein Heizelement (25), das auf dem Wirbel (24) angeordnet ist; wobei die Heizvorrichtung (20) ein elektrisch leitendes vorstehendes Element (28) aufweist, das in elektrischem Kontakt mit dem Heizelement (25) steht,
**dadurch gekennzeichnet, dass** die elektrische Verbindungsvorrichtung (27) einen elektrisch leitenden, gekrümmten Draht aufweist, der einen Schleifer bildet und mit dem vorstehenden Element (28) der Heizvorrichtung (20) zusammenwirken kann, oder dass die elektrische Verbindungsvorrichtung (27) eine auf einer Feder montierte Halbkugel aufweist, die einen Schleifer bildet und mit dem vorstehenden Element so zusammenwirkt, dass ein elektrischer Kontakt beibehalten wird.

2. Scheibenwischerblatt (22) nach Anspruch 1,
**dadurch gekennzeichnet, dass** der Wirbel (24) im Wesentlichen die Form eines Längsblatts mit rechteckigem Querschnitt mit zwei großen gegenüberliegenden Längsflächen aufweist, wobei eine dieser großen Längsflächen das elektrisch leitende vorstehende Element (28) ist.

3. Scheibenwischerblatt (22) nach einem der Ansprüche 1 bis 2, **dadurch gekennzeichnet, dass** das Heizelement (25) eine Heizfolie ist.

4. Scheibenwischerblatt (22) nach einem der vorhergehenden Ansprüche, **dadurch gekennzeichnet, dass** das vorstehenden Element (28) eine Breite A und das Trägergestell (21) einen Längskern (32) der Breite B aufweist, wobei die Breite A des vorstehenden Elements (28) geringer ist als die Breite B des Längskerns (32).

5. Wischvorrichtung, **dadurch gekennzeichnet, dass** sie ein Scheibenwischerblatt (22) nach einem der vorhergehenden Ansprüche aufweist.

6. Verfahren zum Zusammenfügen eines Scheibenwischerblatts nach einem der Ansprüche 1 bis 4, **dadurch gekennzeichnet, dass** es die folgenden Schritte aufweist:
• Montieren des Scheibenwischerverbinders (31) auf dem Trägergestell (21) des Scheibenwischerblatts (22);
• Einführen des Wirbels (24) in das Gehäuse (23) des Trägergestells (21), wobei der Wirbel (24) an einem der Längsenden des Trägergestells (21) eingeführt wird;
• Einschieben in Längsrichtung des Wirbels (24) bis zu seiner Endposition, wobei sich die elektrische Verbindungsvorrichtung (27) des elektrischen Steckers (26) in elektrischem Kontakt mit dem vorstehenden Element (28) der Heizvorrichtung (20) steht.

7. Verfahren zum Zusammenfügen eines Scheibenwischerblatts nach dem vorhergehenden Anspruch,
**dadurch gekennzeichnet, dass** die Heizvorrichtung (20) geeignet ist zum:
• Verhindern, dass die elektrische Verbindungsvorrichtung (27) mit dem Heizelement (25) in Kontakt tritt, bevor sich der Wirbel (24) in der endgültigen Montageposition befindet;
• Kontaktherstellen zwischen der elektrischen Verbindungsvorrichtung (27) und dem vorstehenden Element (28), wenn sich der Wirbel (24) in der endgültigen Montageposition befindet.

8. Verfahren zum Zusammenfügen eines Scheibenwischerblatts nach einem der vorhergehenden Ansprüche, **dadurch gekennzeichnet, dass** der Scheibenwischerverbinder (31) und der elektrische Stecker (26) ein einstückiges Teil sind, das in einem einzigen Formgussschritt hergestellt wurde.

## Claims

1. Windscreen wiper (22),comprising:
• a support frame (21) with a longitudinal main axis, which has:
∘ a longitudinal housing (23) which opens out at least at one of the longitudinal ends of the support frame (21);
∘ holding means (29) for holding a squeegee blade;
• a squeegee blade;
• a wiper connector (31) that is able to connect the wiper (22) to an actuating arm of a wiper device, this wiper connector (31) being mounted on the support frame (21), the wiper connector (31) comprising an electrical connector (26) and a connection device (27)
• a heating device (20) that is able to be fitted to the support frame (21) of a windscreen wiper (22) by sliding in a longitudinal housing (23) in the support frame (21), the heating device (20) having:
• at least one vertebra (24) that is able to be mounted longitudinally inside the housing (23) in the support frame (21);
• at least one heating element (25) disposed on the vertebra (24); the heating device (20) comprises an electrically conductive protruding element (28) in electrical contact with the heating element (25),
**characterized in that** the electrical connection device (27) comprises a curved electrically conductive wire that forms a sliding contact and is able to cooperate with the protruding element (28) of the heating device (20) or the electrical connection device (27) comprises a spring-mounted half-sphere that forms a sliding contact and is able to cooperate with the protruding element so as to maintain electrical contact.

2. Windscreen wiper (22) according to Claim 1, **characterized in that** the vertebra (24) is substantially in the form of a longitudinal blade with a rectangular section having two opposite longitudinal large faces, one of these longitudinal large faces comprising the electrically conductive protruding element (28).

3. Windscreen wiper (22) according to either of Claims 1 and 2,
**characterized in that** the heating element (25) is a heating film.

4. Windscreen wiper (22) according to one of the preceding Claims,
**characterized in that** the protruding element (28) has a width A and the support frame (21) has a longitudinal core (32) of width B, the width A of the protruding element (28) being less than the width B of the longitudinal core (32).

5. Wiper device,
**characterized in that** it comprises a windscreen wiper (22) according to one of the preceding Claims .

6. Method for assembling a windscreen wiper according to one of Claims 1 to 4,
**characterized in that** it comprises the following steps of:
• mounting the wiper connector (31) on the support frame (21) of the windscreen wiper (22);
• introducing the vertebra (24) into the interior of the housing (23) of the support frame (21), the vertebra (24) being introduced at one of the longitudinal ends of said support frame (21);
• longitudinally sliding the vertebra (24) into its final position, the electrical connection device (27) of the electrical connector (26) then being in electrical contact with the protruding element (28) of the heating device (20).

7. Method for assembling a windscreen wiper according to the preceding claim,
**characterized in that** the heating device (20) is able:
• to prevent the electrical connection device (27) from coming into contact with the heating element (25) before the vertebra (24) is in its final mounted position;
• to bring the electrical connection device (27) and the protruding element (28) into contact when the vertebra (24) is in its final mounted position.

8. Method for assembling a windscreen wiper according to one of the preceding Claims,
**characterized in that** the wiper connector (31) and the electrical connector (26) are a one-piece part, manufactured in one moulding step.
